# EUROPÄISCHE PATENTSCHRIFT

(11) **EP 3 114 701 B1**
(45) Veröffentlichungstag und Bekanntmachung des Hinweises auf die Patenterteilung: **30.12.2020**
(21) Anmeldenummer: 15702287.2
(22) Anmeldetag: 04.02.2015
(51) Int. Cl.: H01J 61/72, C09K 11/08, H01J 61/44

(54) **NIEDERDRUCKENTLADUNGSLAMPE MIT LEUCHTSTOFFPARTIKELN KLEINER KORNGRÖSSE**
LOW-PRESSURE DISCHARGE LAMP WITH FLUORESCENT PARTICLES HAVING A SMALL PARTICLE SIZE
LAMPE À DÉCHARGE À BASSE PRESSION COMPORTANT DES PARTICULES DE SUBSTANCES LUMINESCENTES DE PETITE TAILLE DE PARTICULE

(30) Priorität: 06.03.2014 DE 102014204172
(43) Veröffentlichungstag der Anmeldung: 11.01.2017
(73) Patentinhaber: LEDVANCE GmbH, 85748 Garching (DE)
(72) Erfinder: KONRAD, Armin, 86845 Großaitingen (DE); HIRRLE, Renate, 86163 Augsburg (DE); SCHÖNHEITS, Markus, 86159 Augsburg (DE); ZURAWSKI, Alexander, 80796 München (DE); PHILIPP, Frauke, 86150 Augsburg (DE); HUCKENBECK, Thomas, 86159 Augsburg (DE)
(74) Vertreter: Schulz, Oliver Frank Michael
(86) Internationale Anmeldenummer: PCT/EP2015/052274
(87) Internationale Veröffentlichungsnummer: WO 2015/132030

(56) Entgegenhaltungen:
- JP-A- 2003 027 051
- JP-A- 2003 272 559
- JP-A- 2005 310 537
- US-A- 4 447 756
- US-A1- 2006 267 500
- US-A1- 2006 267 500
- US-A1- 2007 170 834
- US-A1- 2007 170 834
- US-A1- 2008 136 311
- US-A1- 2008 136 311
- US-A1- 2008 197 762
- William M. Yen: "Inorganic Phosphors: Compositions, Preparation and Optical Properties", , 2004, Seite 44,45,392, XP055588528, DOI: https://doi.org/10.1201/9780203506325 ISBN: 978-0-429-21125-6 Gefunden im Internet: URL:https://www.crcpress.com/Inorganic-Pho sphors-Compositions-Preparation-and-Optica l-Properties/Yen-Weber/p/book/978084931949 5
- William M. Yen: "Inorganic Phosphors: Compositions, Preparation and Optical Properties", , 2004, page 44,45,392, XP055588528, DOI: https://doi.org/10.1201/9780203506325 ISBN: 978-0-429-21125-6 Retrieved from the Internet: URL:https://www.crcpress.com/Inorganic-Pho sphors-Compositions-Preparation-and-Optica l-Properties/Yen-Weber/p/book/978084931949 5

## Beschreibung

Die Erfindung betrifft eine Niederdruckentladungslampe.

Herkömmliche Niederdruckentladungslampen, beispielsweise Leuchtstofflampen und/oder Kompaktleuchtstofflampen, weisen Entladungsgefäße auf. Ein derartiges Entladungsgefäß ist beispielsweise ein Glasgefäß und/oder eine Entladungsröhre, das bzw. die beispielsweise einen, zwei oder mehr U-förmige, gerade und/oder röhrenförmig ausgebildete Gefäßbereiche aufweisen kann. Das Entladungsgefäß kann an seinen Innenseiten eine Beschichtungsstruktur aufweisen. Ferner kann eine Niederdruckentladungslampe ein elektronisches Vorschaltgerät aufweisen.

Die Beschichtungsstruktur kann beispielsweise eine Schutzschicht direkt auf dem Entladungsgefäß und eine Leuchtstoffschicht auf der Schutzschicht aufweisen. Die Schutzschicht dient beispielsweise zum Abschirmen von UV-Strahlung gegenüber einer Umgebung der Niederdruckentladungslampe, zur Reflektion von UV-Strahlung zurück in das Entladungsgefäß und zum Verhindern einer Diffusion von Quecksilber in das Material des Entladungsgefäßes. Die Leuchtstoffschicht weist Leuchtstoffe in Form von Leuchtstoffpartikeln zum Konvertieren elektromagnetischer Strahlung in farbiges Licht auf, wobei das farbige Licht so gemischt werden kann, dass die Niederdruckentladungslampe im Betrieb weißes Licht emittiert. Die Schutzschicht und/oder die Leuchtstoffschicht können in dem Entladungsgefäß gebildet werden beispielsweise durch Einbringen einer die Leuchtstoffpartikel aufweisenden Suspension oder Schlämme in das Entladungsgefäß.

Zusätzlich kann dem beschichteten Entladungsgefäß ein Gas und eine geringe Menge an Quecksilber zugegeben werden. Bei Zimmertemperatur in ausgeschaltetem Zustand der Entladungslampe kann das Quecksilber im Inneren des Entladungsgefäßes zum Teil gasförmig und zum Teil flüssig sein und einen kleinen Tropfen bilden. Schaltet man die Entladungslampe an, so fließt ein elektrischer Strom durch das Gas in dem beschichteten Entladungsgefäß, so dass das Quecksilber erhitzt wird, gasförmig wird und in dem gasförmigen Zustand beginnt, die elektromagnetische Strahlung, insbesondere UV-Strahlung, abzustrahlen, mittels der die Leuchtstoffpartikel zum Leuchten angeregt werden.

Die Leuchtstoffpartikel können in einem Trägermaterial eingebettet sein. Die Leuchtstoffe können durch Anregung mit kurzwelligem Licht bis hin zu UV-Strahlung, beispielsweise der UV-Strahlung des Quecksilbers, sichtbares Licht erzeugen. Die Leuchterscheinungen beruhen beispielsweise auf Fluoreszenz oder Phosphoreszenz. Die Leuchtstoffpartikel weisen die Leuchtstoffe auf oder sind von diesen gebildet. Die Leuchtstoffpartikel bzw. die Leuchtstoffe können beispielsweise kristalline Wirtsgitter aufweisen, deren Gitterplätze teilweise durch Aktivatoren besetzt sind. In anderen Worten kann das Wirtsgitter mit den Aktivatoren dotiert sein. Der Aktivator, also das Dotierungselement, bestimmt die Farbe des erzeugten Lichtes. Die Aktivatoren können beispielsweise Metalle der Seltenen-Erden aufweisen oder von diesen gebildet sein.

Zum Erzeugen von weißem Licht mit vorgegebenen optischen Eigenschaften, beispielsweise einer vorgegebenen Farbtemperatur, einem vorgegebenen Lichtstrom und/oder einer vorgegebenen Lichtausbeute, werden bekannte Leuchtstoffschichten mit Schichtdicken ausgebildet, die eine Mindestdicke nicht unterschreiten. Die Mindestdicken erfordern Mindestmengen und/oder Mindestanteile von Leuchtstoffpartikeln und dementsprechend von Aktivatoren in den entsprechenden Leuchtstoffschichten.

Bekannte Leuchtstoffpartikel weisen Korngrößen auf, die beispielsweise bei rotes Licht emittierenden Leuchtstoffen in einem Bereich liegen zwischen 2,2 µm und 5 µm, die beispielsweise bei grünes Licht emittierenden Leuchtstoffen in einem Bereich liegen zwischen 3,2 µm und 6 µm, beispielsweise bei Lanthanphosphat:Cer,Terbium, und die beispielsweise bei blaues Licht emittierenden Leuchtstoffen in einem Bereich liegen zwischen 5 µm und 7 µm. Leuchtstoffpartikel mit kleineren mittleren Korngrößen haben relativ zum Volumen größere Oberflächen und es besteht allgemein das Vorurteil, dass sich an diesen größeren Oberflächen relativ viele Verunreinigungen anlagern können und dass mit kleineren mittleren Korngrößen relativ viele Verunreinigungen einhergehen würden. Die elektromagnetische Strahlung hat in den Leuchtstoffpartikeln mit kleineren mittleren Korngrößen eine kürzere Weglänge und es besteht allgemein das Vorurteil, dass dies zu einer geringeren Effizienz der Leuchtstoffe führen würde, beispielsweise aufgrund der durch die kürzere Weglänge bedingten geringeren Absorptionswahrscheinlichkeit im Leuchtstoffpartikel und der durch den vergrößerten Oberflächenanteil der Leuchtstoffpartikel bedingten erhöhten Wahrscheinlichkeit für strahlungslose Rekombination. Insbesondere wird die Energie im Gitter transferiert und rekombiniert als sichtbare Strahlung, wohingegen an Grenzflächen, wie den Oberflächen der Leuchtstoffpartikel, strahlungslose Rekombination auftritt. Weiter besteht allgemein das Vorurteil, dass aus den vorstehend genannten Gründen die Dotierung mit Aktivatoren erhöht werden müsse, um eine Niederdruckentladungslampe mit herkömmlichen optischen Eigenschaften zu schaffen, was jedoch zu höheren Kosten führen würde. Daher sind hoch effiziente Leuchtstoffe, also Leuchtstoffe mit einer hohen Quanteneffizienz, in Form von Leuchtstoffpartikeln mit kleineren mittleren Korngrößen in Niederdruckentladungslampen nicht bekannt.

Die Mindestdicken der Leuchtstoffschichten und die Untergrenzen für die mittleren Korngrößen der Leuchtstoffpartikel führen zu von der Größe der Niederdruckentladungslampe abhängigen Mindestmengen an Aktivatoren, insbesondere an Metallen der Seltenen-Erden. Diese sind jedoch relativ teuer und führen zu relativ hohen Mindestkosten für die Niederdruckentladungslampe.

US 2008/197762 A1 zeigt eine fluoreszierende Leuchte nach dem Oberbegriff von Anspruch 1.

JP 2003 027051 A zeigt eine neue fluoreszierende Substanz und eine Leuchte, die diese Substanz verwendet.

US 4 447 756 A betrifft eine fluoreszierende Leuchte nach dem Oberbegriff von Anspruch 1, mit einer Lage, die eine Mischung aus Phosphor mit unterschiedlichen Partikelgrößen enthält.

JP 2005 310537 A zeigt eine fluoreszierende Leuchte nach dem Oberbegriff von Anspruch 1 und ein Beleuchtungssystem.

JP 2003 272559 A betrifft eine fluoreszierende Leuchte nach dem Oberbegriff von Anspruch 1.

In verschiedenen Ausführungsformen wird eine Niederdruckentladungslampe bereitgestellt, die kostengünstig herstellbar ist und/oder die vorgegebene optische Eigenschaften erfüllt.

Erfindungsgemäß wird eine Niederdruckentladungslampe bereitgestellt. Die Niederdruckentladungslampe weist ein Entladungsgefäß und eine Beschichtungsstruktur auf. Die Beschichtungsstruktur ist auf einer Innenseite des Entladungsgefäßes ausgebildet. Die Beschichtungsstruktur weist auf erste Leuchtstoffpartikel, die mindestens einen rotes Licht emittierenden Leuchtstoff aufweisen und deren mittlere Korngröße als d50-Wert in einem Bereich liegt von 0,5 µm bis 1,9 µm, zweite Leuchtstoffpartikel, die mindestens einen grünes Licht emittierenden Leuchtstoff aufweisen und deren mittlere Korngröße als d50-Wert in einem Bereich liegt von 0,6 µm bis 2,8 µm oder von 1 µm bis 4 µm, und dritte Leuchtstoffpartikel, die mindestens einen blaues Licht emittierenden Leuchtstoff aufweisen und deren mittlere Korngröße als d50-Wert in einem Bereich liegt von 1 µm bis 4 µm.
Die kleinen mittleren Korngrößen ermöglichen, schon bei einer besonders kleinen Schichtdicke, die geringer ist als die Mindestdicken der bekannten Leuchtstoffschichten, eine geschlossene Leuchtstoffschicht auszubilden. Entgegen der allgemein bestehenden Vorurteile bewirken die kleinen mittleren Korngrößen der Leuchtstoffpartikel überraschenderweise, dass schon mit der besonders dünnen Leuchtstoffschicht die vorgegebenen optischen Eigenschaften, insbesondere eine vorgegebene Farbtemperatur, ein vorgegebener Lichtstrom und/oder eine vorgegebene Lichtausbeute, erzielt werden können. Die vorgegebenen optischen Eigenschaften können entgegen den allgemein bestehenden Vorurteilen überraschenderweise insbesondere ohne eine Erhöhung des Dotierungsgrades mit Aktivatoren und/oder eines prozentualen Anteils an Aktivatoren bezogen auf die Leuchtstoffe erzielt werden. Aufgrund des gleichbleibenden Dotierungsgrades bzw. prozentualen Anteils an Aktivatoren und der geringeren erforderlichen Schichtdicke verringert sich eine erforderliche Mindestmenge an Aktivatoren, insbesondere an Metallen der Seltenen-Erden, was dazu führt, dass die Niederdruckentladungslampe besonders kostengünstig hergestellt werden kann.

Die zweiten Leuchtstoffpartikel, die den grünes Licht emittierenden Leuchtstoff aufweisen und deren mittlere Korngröße als d50-Wert in dem Bereich liegt von 1 µm bis 4 µm, können als Leuchtstoff beispielsweise CeMgAl₁₁O₁₉:Tb (CAT) aufweisen. Bei verschiedenen Ausführungsformen liegt die mittlere Korngröße als d50-Wert der ersten, rotes Licht emittierenden Leuchtstoffpartikel in einem Bereich von 1,2 µm bis 1,7 µm. Alternativ oder zusätzlich liegt die mittlere Korngröße als d50-Wert der zweiten, grünes Licht emittierenden Leuchtstoffpartikel in einem Bereich von 1,5 µm bis 3,5 µm. Alternativ oder zusätzlich liegt die mittlere Korngröße als d50-Wert der dritten, blaues Licht emittierenden Leuchtstoffpartikel in einem Bereich von 1,5 µm bis 3,5 µm. Die zweiten, grünes Licht emittierenden Leuchtstoffpartikel, deren mittlere Korngröße als d50-Wert in dem Bereich liegt von 1,5 µm bis 3,5 µm können als Leuchtstoff beispielsweise CAT aufweisen.

Bei verschiedenen Ausführungsformen liegt die mittlere Korngröße als d50-Wert der zweiten, grünes Licht emittierenden Leuchtstoffpartikel in einem Bereich von 2,0 µm bis 3,4 µm. Alternativ oder zusätzlich liegt die mittlere Korngröße als d50-Wert der dritten, blaues Licht emittierenden Leuchtstoffpartikel in einem Bereich von 2,5 µm bis 3,3 µm. Die zweiten Leuchtstoffpartikel, deren mittlere Korngröße als d50-Wert in dem Bereich liegt von 2 µm bis 3,4 µm können als Leuchtstoff beispielsweise CAT aufweisen.

Bei verschiedenen Ausführungsformen weisen die Leuchtstoffe Wirtsgitter auf, die mit den Aktivatoren dotiert sind. In anderen Worten sind die Leuchtstoffpartikel bzw. die Leuchtstoffe kristallin ausgebildet, wobei die Gitterplätze der Kristallstrukturen teilweise mit den Aktivatoren besetzt sind.

Erfindungsgemäß liegt der Anteil der Aktivatoren in dem grünes Licht emittierenden Leuchtstoff in einem Bereich von 20 mol% bis 50 mol%. Zusätzlich liegt der Anteil der Aktivatoren in dem rotes Licht emittierenden Leuchtstoff in einem Bereich von 2,3 mol% bis 5,5 mol%. Zusätzlich liegt der Anteil der Aktivatoren in dem blaues Licht emittierenden Leuchtstoff in einem Bereich von 3,0 mol% bis 11,0 mol%.

Beispielsweise liegt der Anteil der Aktivatoren in dem grünes Licht emittierenden Leuchtstoff CAT in dem Bereich von 20 mol% bis 50 mol%. Die Anteile der Aktivatoren beziehen sich jeweils auf ein Mol des entsprechenden Leuchtstoffs.

Bei verschiedenen Ausführungsformen liegt eine Menge an Aktivatoren pro 120 cm Lampenlänge in dem rotes Licht emittierenden Leuchtstoff und dem blaues Licht emittierenden Leuchtstoff in einem Bereich von 4,17*10⁻⁵ mol bis 3,84*10⁻⁴. Alternativ oder zusätzlich liegt eine Menge der Aktivatoren pro 120 cm Lampenlänge in dem grünes Licht emittierenden Leuchtstoff in einem Bereich von 5,06*10⁻⁵ mol bis 4,60*10⁻⁴. Die Mengenangaben können sich beispielsweise auf absolute Gesamtmengen des entsprechenden Aktivators in der Niederdruckentladungslampe beziehen.
Die Lampenlänge bezieht sich auf eine Gesamtlänge des Entladungsgefäßes der Niederdruckentladungslampe. Falls das Entladungsgefäß mehrere Gefäßteile hat, so entspricht die Lampenlänge der Summe der Längen der Gefäßteile. Falls das Entladungsgefäß bzw. die Gefäßteile gebogen sind, so dass die Gefäßteile beispielsweise U-förmig sind und jeweils zwei gerade Rohrabschnitte und einen gebogenen Rohrabschnitt aufweisen, so entspricht die Lampenlänge der Summe der Längen aller geraden Rohrabschnitte und aller gebogenen Rohrabschnitte der Niederdruckentladungslampe.
Dass die Mengen der Aktivatoren "pro 120 cm" angegeben sind, bedeutet dass die Mengenangaben auf 120 cm Lampenlänge normiert sind und dass die Niederdruckentladungslampe auch eine kleinere oder größere Lampenlänge haben kann, wobei dann die angegebenen Mengen auf die entsprechende Lampenlänge umgerechnet werden können und wobei die Umrechnung linear und/oder proportional erfolgt. Beispielsweise weist eine Niederdruckentladungslampe mit doppelter Lampenlänge doppelt so viele Aktivatoren auf und eine Niederdruckentladungslampe mit der halben Lampenlänge weist nur halb so viele Aktivatoren auf.

Die Menge an Aktivatoren in dem rotes Licht emittierenden Leuchtstoff und dem blaues Licht emittierenden Leuchtstoff ist als Summe angegeben, da bei der fertiggestellten Niederdruckentladungslampe die Summe der entsprechenden Aktivatoren einfach nachweisbar ist, insbesondere wenn beide als Aktivator Europium aufweisen.

Bei verschiedenen Ausführungsformen hat das Entladungsgefäß einen Innendurchmesser in einem Bereich von 13 mm bis 32 mm.

Bei verschiedenen Ausführungsformen können dieselben Aktivatormengen pro Lampenlänge für verschiedene Lampenausgestaltungen, beispielsweise stabförmige, einfach gebogene oder spiralförmige Niederdruckentladungslampen mit Innendurchmessern von 13 mm bis 32 mm verwendet werden. Die erzielbare Lichtausbeute wird hierbei durch den jeweiligen Entladungsstrom mit beeinflusst. So ergibt sich beispielsweise bei einem geringeren Entladungsstrom eine höhere Lichtausbeute.

Bei verschiedenen Ausführungsformen weisen die Aktivatoren Metalle der Seltenen-Erden auf.

Bei verschiedenen Ausführungsformen weisen die Aktivatoren Europium und/oder Terbium auf.

Bei verschiedenen Ausführungsformen weist mindestens eines der Wirtsgitter Yttriumoxid auf.

Bei verschiedenen Ausführungsformen weist die Beschichtungsstruktur eine Schutzschicht, die auf der Innenseite des Entladungsgefäßes ausgebildet ist, und eine Leuchtstoffschicht auf, die auf der Schutzschicht ausgebildet ist und die die Leuchtstoffpartikel aufweist. Die Schutzschicht dient zum Abschirmen der in der Niederdruckentladungslampe erzeugten UV-Strahlung gegenüber einer Umgebung der Niederdruckentladungslampe, zur Reflektion von UV-Strahlung zurück ins Entladungsgefäß und zum Verhindern einer Diffusion von Quecksilber in das Material des Entladungsgefäßes und als Träger für die Leuchtstoffschicht. Alternativ dazu kann die Beschichtungsstruktur lediglich eine Schicht aufweisen, die als Schutzschicht und Leuchtstoffschicht dient und die beispielsweise als Leuchtstoffpartikel aufweisende Schutzschicht ausgebildet ist. Alternativ dazu kann die Beschichtungsstruktur mehr als zwei, beispielsweise drei, vier oder mehr Schichten aufweisen. Diese zusätzlichen Schichten können beispielsweise weitere Leuchtstoffschichten und/oder weitere Schutzschichten sein.

Bei verschiedenen Ausführungsformen weist die Schutzschicht Aluminiumoxid und/oder hochdisperses Aluminiumoxid auf. Das hochdisperse Aluminiumoxid kann auch als pyrogenes Aluminiumoxid bezeichnet werden.

Bei verschiedenen Ausführungsformen emittiert die Niederdruckentladungslampe im Betrieb weißes Licht.

Bei verschiedenen Ausführungsformen weist die Niederdruckentladungslampe im Betrieb Entladungsströme auf in einem Bereich von 140 mA bis 800 mA, beispielsweise in einem Bereich von 140 mA bis 290 mA, weiter beispielsweise in einem Bereich von 150 mA bis 200 mA, und/oder in einem Bereich von 290 mA bis 800 mA.

Bei verschiedenen Ausführungsformen liegt die Lichtausbeute der Niederdruckentladungslampe in einem Bereich von 70 lm/W bis 120 lm/W, beispielsweise in einem Bereich von 80 lm/W bis 110 lm/W, beispielsweise in einem Bereich von 85 lm/W bis 100 lm/W. Die Lichtausbeute kann auch als Effizienz der Niederdruckentladungslampe bezeichnet werden.

Bei verschiedenen Ausführungsformen liegt eine Farbtemperatur des erzeugten Lichts in einem Bereich von 2.500 K bis 8.000 K, beispielsweise von 2.500 K bis 3.200 K, beispielsweise von 3.500 K bis 4.200 K, beispielsweise von 5.000 K bis 6.500 K.

Bei verschiedenen Ausführungsformen liegt die Quanteneffizienz der Leuchtstoffe in einem Bereich von 80% bis 100%, beispielsweise von 82% bis 98%, beispielsweise von 83% bis 92%. Die Quanteneffizienz beschreibt hierbei die Anzahl der von einem Leuchtstoff in sichtbares Licht konvertierten Photonen zu den eingestrahlten Photonen, d.h. das Verhältnis zwischen der Anzahl abgestrahlter Photonen neuer Wellenlänge zu der Anzahl der absorbierten Photonen der Anregungs-Wellenlänge.

Die Niederdruckentladungslampe kann insbesondere stabförmig, einfach gebogen oder spiralförmig sein. Das Entladungsgefäß ist beispielsweise mit einem Füllgasgemisch aus Argon und Krypton gefüllt.

Die Niederdruckentladungslampe kann beispielsweise eine T8 L 36W Niederdruckentladungslampe nach DIN 60081 sein, die eine Lampenlänge von beispielsweise ungefähr 120 cm aufweist. Der relative Massenanteil von Argon beträgt beispielsweise 25%, der von Krypton beispielsweise 75%. Der Fülldruck ist auf ca. 2,1 hPa eingestellt, wobei ca. hier einer Genauigkeit von beispielsweise 0,2 hPa entsprechen kann. Das Entladungsgefäß hat einen Innendurchmesser im Bereich beispielsweise von 24 mm bis 26 mm und eine Glaswandstärke von ungefähr 0,75 mm.

Die Niederdruckentladungslampe kann beispielsweise eine T8 L 58W Niederdruckentladungslampe nach DIN 60081 sein, die eine Lampenlänge von beispielsweise ungefähr 150 cm aufweist. Der relative Massenanteil von Argon beträgt beispielsweise 25%, der von Krypton beispielsweise 75%. Der Fülldruck ist auf ca. 2,0 hPa eingestellt, wobei ca. hier einer Genauigkeit von beispielsweise 0,2 hPa entsprechen kann. Das Entladungsgefäß hat einen Innendurchmesser im Bereich beispielsweise von 24 mm bis 26 mm und eine Glaswandstärke von ungefähr 0,75 mm. Die Niederdruckentladungslampe kann beispielsweise eine T5 HO 54W Niederdruckentladungslampe nach DIN 60081 sein, die eine Lampenlänge aufweist von beispielsweise ungefähr 115 cm. Der relative Massenanteil von Argon beträgt beispielsweise 80%, der von Krypton beispielsweise 20%. Der Fülldruck ist beispielsweise auf ca. 2,7 hPa eingestellt, wobei ca. hier einer Genauigkeit von 0,2 hPa entsprechen kann. Das Entladungsgefäß kann einen Innendurchmesser im Bereich beispielsweise von 13 mm bis 16 mm und eine Glaswandstärke von ungefähr 0,6 mm haben.

Alternativ dazu kann die Niederdruckentladungslampe eine andere Niederdruckentladungslampe nach DIN 60081 sein.

Die Niederdruckentladungslampen haben im Betrieb einen Lampenstrom insbesondere zwischen 290 mA und 800 mA, wie beispielsweise eine Niederdruckentladungslampe vom Typ T8 L36W, die einen Lampenstrom von 430 mA hat. Es kann eine Effizienz bzw. Lichtausbeute beispielsweise größer 70 lm/W, größer 85 lm/W oder größer 95 lm/W erzielt werden. Alternativ dazu kann die Niederdruckentladungslampe einen geringeren Lampenstrom insbesondere kleiner 290 mA haben, insbesondere im Bereich von 140 mA bis 290 mA, insbesondere im Bereich von 150 mA bis 200 mA, wie beispielsweise eine Niederdruckentladungslampe vom Typ T5 HE. Aufgrund der geringeren Lampenströme kann eine höhere Effizienz bzw. höhere Lichtausbeute erzielt werden, beispielsweise größer 80 lm/w, größer 95 lm/W oder größer 105 lm/W.

Die Lichtausbeuten bzw. Effizienzangaben beziehen sich dabei auf die maximal erreichbare Effizienz gegenüber dem Quecksilber-Dampfdruck der entsprechenden Quecksilber-Niederdruckentladungslampe. Bei einer T5 HE Niederdruckentladungslampe mit einem Lampenstrom von 170 mA kann die maximal erzielbare Effizienz beispielsweise im Bereich von 34°C bis 39°C Umgebungstemperatur erreicht werden. Bei einer T8 L36W Niederdruckentladungslampe mit 430 mA Lampenstrom kann die maximal erzielbare Effizienz beispielsweise bei einer Umgebungstemperatur im Bereich von 23°C bis 28°C erreicht werden. Die Temperatur, bei der die Niederdruckentladungslampen ihre maximale Effizienz erreichen, kann konstruktionsbedingt beispielsweise durch Änderung der Länge der Lampengestelle, des Abstands einer Wendel der Niederdruckentladungslampe zu einem Gefäßende des Entladungsgefäßes oder anderer Quecksilber-Dampfdruck regulierender Maßnahmen, wie der Verwendung von Amalgam, eingestellt werden.

Ausführungsbeispiele der Erfindung sind in den Figuren dargestellt und werden im Folgenden näher erläutert.

Es zeigen:
- Figur 1: eine Seitenansicht eines Ausführungsbeispiels einer Niederdruckentladungslampe;
- Figur 2: eine Schnittdarstellung der Niederdruckentladungslampe gemäß Figur 1;
- Figur 3: eine Seitenansicht eines Ausführungsbeispiels einer Niederdruckentladungslampe;
- Figur 4: eine Schnittdarstellung der Niederdruckentladungslampe gemäß Figur 3;
- Figur 5: eine detaillierte Schnittdarstellung eines Ausführungsbeispiels eines Entladungsgefäßes einer Niederdruckentladungslampe;
- Figur 6: ein Diagramm mit einer Lichtstrom-Gewicht-Kurve einer herkömmlichen Niederdruckentladungslampe und mit einer Lichtstrom-Gewicht-Kurve eines Ausführungsbeispiels einer Niederdruckentladungslampe.
- Figur 7: eine erste Tabelle;
- Figur 8: eine zweite Tabelle;
- Figur 9: eine dritte Tabelle;
- Figur 10: eine vierte Tabelle;
- Figur 11: eine fünfte Tabelle.

In der folgenden ausführlichen Beschreibung wird auf die beigefügten Zeichnungen Bezug genommen, die Teil dieser Beschreibung bilden und in denen zur Veranschaulichung spezifische Ausführungsbeispiele gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsbeispielen in einer Anzahl verschiedener Orientierungen positioniert werden können, dient die Richtungsterminologie zur Veranschaulichung und ist auf keinerlei Weise einschränkend. Es versteht sich, dass andere Ausführungsbeispiele benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen Ausführungsbeispiele miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

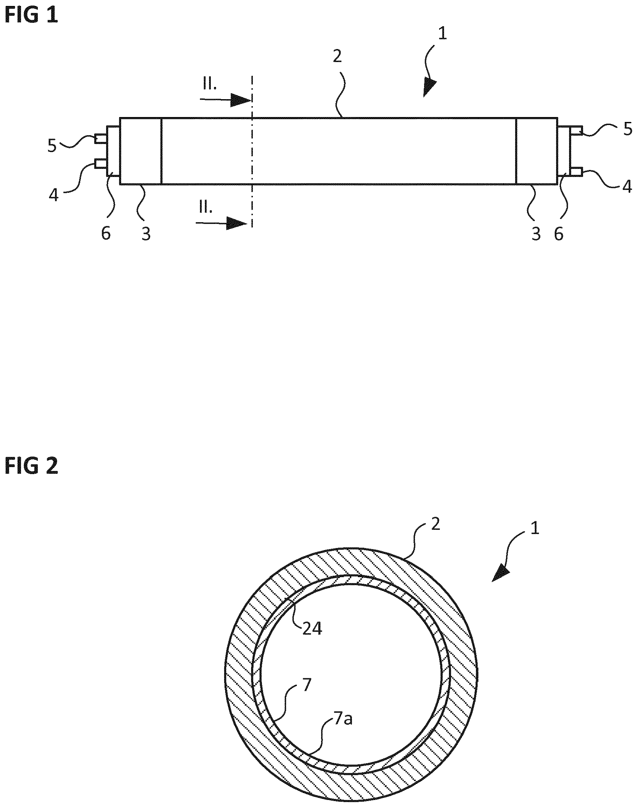

**Fig. 1** zeigt eine Niederdruckentladungslampe 1, die ein Entladungsgefäß 2 und zwei Gehäuse 3 aufweist. Die Niederdruckentladungslampe 1 ist eine Leuchtstofflampe. Das Entladungsgefäß 2 kann beispielsweise Glas, beispielsweise Kalknatronglas, aufweisen oder daraus gebildet sein. Das Entladungsgefäß 2 kann auch als Druckentladungsgefäß, Leuchtkolben, Entladungsröhre, Gasentladungsröhre oder als Brenner bezeichnet werden. Das Entladungsgefäß 2 ist beispielsweise stabförmig ausgebildet und umschließt einen Entladungsraum. Das Entladungsgefäß 2 erstreckt sich mit seinen freien Enden in je eines der Gehäuse 3. Alternativ dazu kann das Entladungsgefäß 2 mit einer Krümmung oder spiralförmig ausgebildet sein, zwei oder mehr Gefäßteile aufweisen und/oder lediglich ein Gehäuse 3 aufweisen.
Jedes der Gehäuse 3 weist einen Sockel 6 auf. Die Niederdruckentladungslampe 1 kann als zweiseitig gesockelte Niederdruckentladungslampe 1 bezeichnet werden. Die Sockel 6 können als Stiftsockel bezeichnet werden. Aus den Sockeln 6 führen jeweils Kontaktstifte 4 und 5 zum Versorgen der Niederdruckentladungslampe 1 mit elektrischem Strom und/oder zum Steuern der Niederdruckentladungslampe 1 nach außen. Das Entladungsgefäß 2 kann mittels eines nicht dargestellten Kitts in den Gehäusen 3 befestigt sein. Beispielsweise kann das Entladungsgefäß 2 an den Sockeln 6 befestigt sein.

**Fig. 2** zeigt eine Schnittdarstellung der Niederdruckentladungslampe 1 gemäß Figur 1 entlang der Schnittlinie II. Das Entladungsgefäß 2 weist eine Innenseite 24 auf, die sich um den Entladungsraum erstreckt. An der Innenseite 24 des Entladungsgefäßes 2 ist eine Beschichtungsstruktur 7 ausgebildet. Die Beschichtungsstruktur 7 weist eine Oberfläche 7a der Beschichtungsstruktur 7 auf. Das Entladungsgefäß 2 mit der Beschichtungsstruktur 7 kann als beschichtetes Entladungsgefäß 2 bezeichnet werden. Eine Lampenlänge der Niederdruckentladungslampe 1 entspricht der Länge des Entladungsgefäßes 2.

In dem Entladungsraum befindet sich ein Gas, beispielsweise ein Edelgas, das im Betrieb als Elektronenleiter und/oder Elektronenpuffer dient. Als Gas kann beispielsweise Argon und/oder Krypton verwendet werden. Beispielsweise können 4% bis 100%, beispielsweise 20% bis 75%, beispielsweise ungefähr 75% Krypton verwendet werden. Alternativ oder zusätzlich können beispielsweise 20% bis 90%, beispielsweise 40% bis 80%, beispielsweise ungefähr 25% Argon verwendet werden. Ferner können optional geringere Mengen an einem, zwei oder mehr weiteren Gasen in dem Entladungsgefäß 2 vorhanden sein. Die geringeren Mengen können beispielsweise kleiner 1%, beispielsweise kleiner 0,1% sein. Das Gas kann beispielsweise einen Druck zwischen 1,5 hPa und 3 hPa, beispielsweise ungefähr 2 hPa, haben. Ferner befindet sich in dem Entladungsgefäß 2 eine geringe Menge an Quecksilber.

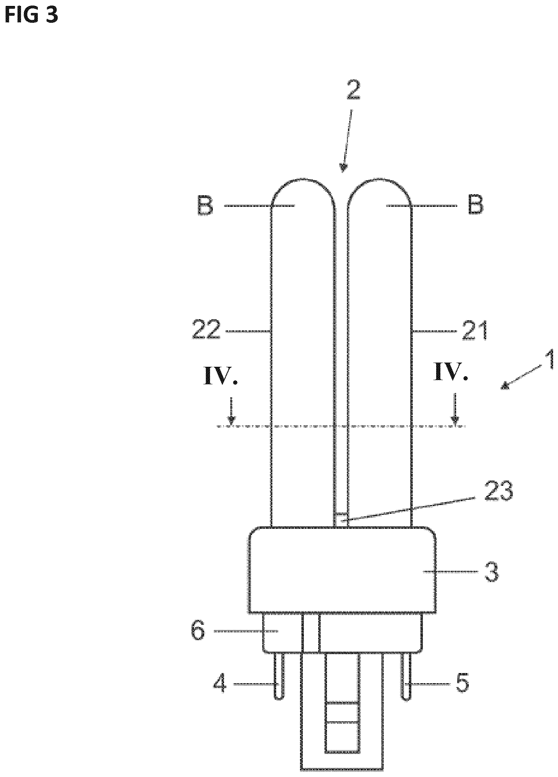

**Fig.** 3 zeigt eine Niederdruckentladungslampe 1, die ein Entladungsgefäß 2 und ein Gehäuse 3 aufweist. Die Niederdruckentladungslampe 1 kann beispielsweise eine Energiesparlampe und/oder eine Kompaktleuchtstofflampe sein. Das Entladungsgefäß 2 kann beispielsweise Glas, beispielsweise Kalknatronglas, aufweisen oder daraus gebildet sein. Das Entladungsgefäß 2 kann auch als Druckentladungsgefäß, Leuchtkolben, Entladungsröhre, Gasentladungsröhre oder als Brenner bezeichnet werden. Das Entladungsgefäß 2 weist beispielsweise zwei an sich U-förmig und im Querschnitt röhrenförmig ausgebildete Gefäßteile 21 und 22 auf, welche durch einen Steg 23 verbunden sind und dadurch einen zusammenhängenden Entladungsraum bilden. Die beiden Gefäßteile 21 und 22 erstrecken sich mit ihren freien Enden in das Gehäuse 3, in dem optional ein elektronisches Vorschaltgerät (nicht dargestellt) angeordnet sein kann. Alternativ dazu kann das Entladungsgefäß 2 nur ein an sich U-förmig und im Querschnitt röhrenförmig ausgebildetes Gefäßteil 21 aufweisen mit einem Gehäuse 3, beispielsweise am Ende der U-Schenkel.

Das Gehäuse 3 weist einen Sockel 6 auf. Die Niederdruckentladungslampe 1 kann als einseitig gesockelte Niederdruckentladungslampe 1 bezeichnet werden. Aus dem Sockel 6 führen Kontaktstifte 4 und 5 zum Versorgen der Entladungslampe 1 mit elektrischem Strom und/oder zum Steuern der Entladungslampe 1 nach außen. An den in Figur 3 oberen Teilbereichen des Entladungsgefäßes 2 sind die Gefäßteile 21 bogenförmigen ausgebildet. In den bogenförmigen Teilbereichen der Gefäßteile 21, 22 entsprechen Querschnitte B der Gefäßteile 21, 22 im Wesentlichen den Querschnitten, die die Gefäßteile 21 und 22 außerhalb dieser bogenförmigen Teilbereiche aufweisen, beispielsweise den Querschnitten im Bereich der Schnittlinie IV. Das Entladungsgefäß 2 kann mittels eines nicht dargestellten Kitts an dem Gehäuse 3 befestigt sein. Beispielsweise kann das Entladungsgefäß 2 an dem Sockel 6 befestigt sein.

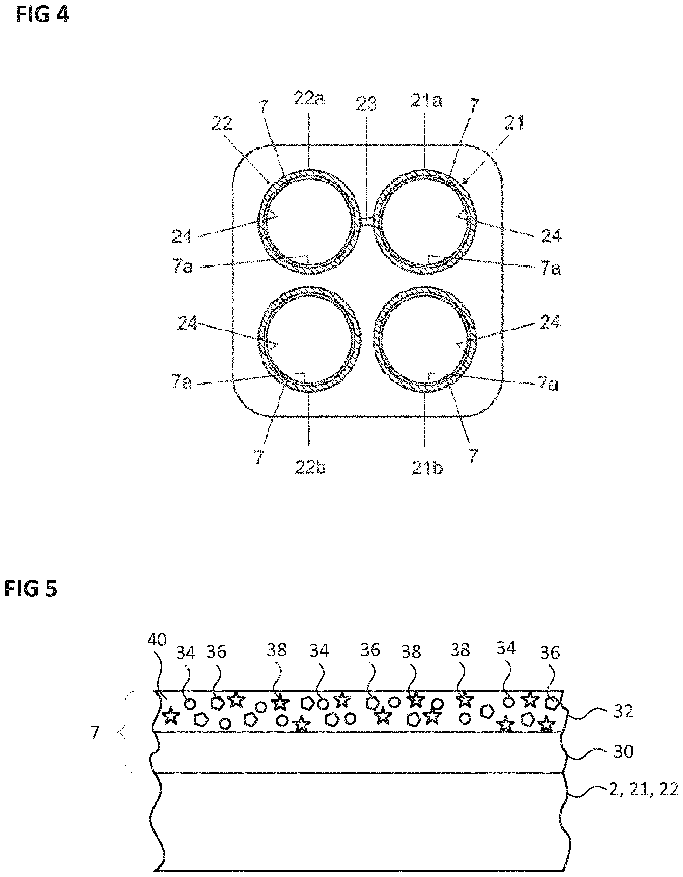

**Fig. 4** zeigt eine Schnittdarstellung der Entladungslampe 1 entlang der Schnittlinie VI. in Figur 3. Die Schnittdarstellung zeigt zwei Rohrabschnitte 21a, 21b des Gefäßteils 21 und zwei Rohrabschnitte 22a, 22b des Gefäßteils 22. Die Gefäßteile 21, 22 weisen Innenseiten 24 des Entladungsgefäßes 2 auf. An den Innenseiten 24 des Entladungsgefäßes 2 und damit an den Innenseiten 24 der Gefäßteile 21, 22 und somit auch an den Innenseiten 24 der Rohrabschnitte 21a, 21b, 22a, 22b ist eine Beschichtungsstruktur 7 ausgebildet. Die Beschichtungsstruktur 7 weist eine Oberfläche 7a der Beschichtungsstruktur 7 auf. Das Entladungsgefäß 2 mit der Beschichtungsstruktur 7 kann als beschichtetes Entladungsgefäß 2 bezeichnet werden. Eine Lampenlänge der Niederdruckentladungslampe 1 entspricht einer Summe der Längen der Gefäßteile 21, 22 der Niederdruckentladungslampe 1. Die Längen der Gefäßteile 21, 22 der Niederdruckentladungslampe 1 entsprechen jeweils der Summe der Längen der entsprechenden geraden Rohrabschnitte 21a, 21b, 22a, 22b und des entsprechenden gebogenen Rohrabschnitts, der die entsprechenden geraden Rohrabschnitte 21a, 21b, 22a, 22b verbindet.
In dem Entladungsgefäß 2 befindet sich ein Gas, beispielsweise ein Edelgas, das im Betrieb als Elektronenleiter und/oder Elektronenpuffer dient. Als Gas kann beispielsweise Argon und/oder Krypton verwendet werden. Beispielsweise können 4% bis 100%, beispielsweise 20% bis 75%, beispielsweise ungefähr 75% Krypton verwendet werden. Alternativ oder zusätzlich können beispielsweise 20% bis 90%, beispielsweise 40% bis 80%, beispielsweise ungefähr 25% Argon verwendet werden. Ferner können optional geringere Mengen an einem, zwei oder mehr weiteren Gasen in dem Entladungsgefäß 2 vorhanden sein. Das Gas kann beispielsweise einen Druck zwischen 1,5 und 3 hPa, beispielsweise von ungefähr 2 hPa, haben. Ferner befindet sich in dem Entladungsgefäß 2 eine geringe Menge an Quecksilber.
**Fig. 5** zeigt eine schematische Schnittdarstellung eines Ausführungsbeispiels eines Entladungsgefäßes 2 und/oder von Gefäßteilen 21, 22 des Entladungsgefäßes 2. Das Entladungsgefäß 2 kann beispielsweise eines der im Vorhergehenden erläuterten Entladungsgefäße 2 sein. Das Entladungsgefäß 2 bzw. die Gefäßteile 21, 22 können beispielsweise eine Wandstärke zwischen 0,1 mm und 2 mm, beispielsweise zwischen 0,2 mm und 0,8 mm aufweisen.

Die Beschichtungsstruktur 7 weist beispielsweise eine Schutzschicht 30 und eine Leuchtstoffschicht 32 auf. Die Schutzschicht 30 ist beispielsweise direkt auf der Innenseite 24 des Entladungsgefäßes 2 bzw. den Innenseiten 24 der Gefäßteile 21, 22 ausgebildet. Die Leuchtstoffschicht 32 ist beispielsweise direkt auf der Schutzschicht 30 ausgebildet. Die Leuchtstoffschicht 30 weist zweite Leuchtstoffpartikel 34 auf, die mindestens einen grünes Licht emittierenden Leuchtstoff aufweisen, erste Leuchtstoffpartikel 36, die mindestens einen rotes Licht emittierenden Leuchtstoff aufweisen, und dritte Leuchtstoffpartikel 38, die mindestens einen blaues Licht emittierenden Leuchtstoff aufweisen, auf. Die Leuchtstoffpartikel 34, 36, 38 weisen die entsprechenden Leuchtstoffe auf oder sind von diesen gebildet. Alternativ dazu kann die Beschichtungsstruktur 7 lediglich eine Schicht aufweisen, die als Schutzschicht 30 und Leuchtstoffschicht 32 dient und die beispielsweise als Leuchtstoffpartikel 34, 36, 38 aufweisende Schutzschicht 30 ausgebildet ist. Alternativ dazu kann die Beschichtungsstruktur 7 mehr als zwei, beispielsweise drei, vier oder mehr Schichten aufweisen. Diese zusätzlichen Schichten können beispielsweise weitere Leuchtstoffschichten 32 und/oder weitere Schutzschichten 30 sein.
Die Leuchtstoffpartikel 34, 36, 38 können beispielsweise in einem Trägermaterial 40 eingebettet und/oder eingebunden sein und/oder Teil eines Leuchtstoffgemischs sein. Die Leuchtstoffschicht 30 kann beispielsweise auch aus ersten, zweiten und dritten Leuchtstoffpartikeln 34, 36, 38 bestehen, die ein Leuchtstoffgemisch bilden. Die Leuchtstoffe können kristallin ausgebildet sein und Wirtsgitter aufweisen. Das Wirtsgitter kann beispielsweise Yttriumoxid aufweisen oder davon gebildet sein. Die Leuchtstoffe weisen Aktivatoren auf, die in den Wirtsgittern gebunden sind. Beispielsweise sind die Leuchtstoffe und insbesondere die Wirtsgitter mit den Aktivatoren dotiert. Die Aktivatoren weisen beispielsweise Metalle der Seltenen-Erden auf. Die Aktivatoren weisen beispielsweise Cer, Europium und/oder Terbium auf. Beispielsweise können die Wirtsgitter mit Europium und/oder Terbium dotiert werden und dann Europium bzw. Terbium aufweisen. Die ersten Leuchtstoffpartikel 34 können den rotes Licht emittierenden Leuchtstoff Y₂O₃:Eu aufweisen oder davon gebildet sein. Die zweiten Leuchtstoffpartikel 36 können den grünes Licht emittierenden Leuchtstoff LaPO₄:Ce,Tb oder LaPO₄:Tb, im Folgenden LAP bezeichnet, oder CeMgAl₁₁O₁₉:Tb, im Folgenden CAT bezeichnet, aufweisen. Die dritten Leuchtstoffpartikel 38 können den blaues Licht emittierenden Leuchtstoff BaMgAl₁₀O₁₇:Eu, im Folgenden BAM bezeichnet, aufweisen.

Die ersten Leuchtstoffpartikel 34 weisen eine mittlere Korngröße d50 in einem Bereich von 0,5 µm bis 1,9 µm, beispielsweise in einem Bereich von 1,2 µm bis 1,7 µm auf. Die zweiten Leuchtstoffpartikel 36, beispielsweise die CAT-Partikel, weisen eine mittlere Korngröße d50 von 1 µm bis 4 µm, beispielsweise von 1,5 µm bis 3,5 µm, beispielsweise von 2,0 µm bis 3,5 µm, auf. Die dritten Leuchtstoffpartikel 38 weisen eine mittlere Korngröße d50 in einem Bereich von 1 µm bis 4 µm, beispielsweise in einem Bereich von 1,5 µm bis 3,5 µm, beispielsweise in einem Bereich von 2,5 µm bis 3,3 µm, auf.

Die mittleren Korngrößen als d50-Wert der Leuchtstoffe werden beispielsweise mittels eines Laserbeugungsmeßgeräts bestimmt, insbesondere sofern sie in Reinform vorliegen, beispielsweise ein CILAS 1064 der Firma Quantachrome. Alternativ kann beispielsweise ein Laserstreuungsmeßgerät zur Messung des d50-Werts zum Einsatz kommen. Alternativ oder zusätzlich eignet sich beispielsweise eine CPS-Scheibenzentrifuge, beispielsweise der Firma LOT Oriel, mit einer Umdrehungsgeschwindigkeit von beispielsweise 18.000 1/min. Hier können Teilchengrößenverteilungen mittels Sedimentation, die durch Zentrifugalkraft beschleunigt wird, bestimmt werden. Alternativ kann der d50-Wert der einzelnen Komponenten auch mittels Rasterelektronenmikroskop für die Leuchtstoffmischung bzw. die einzelnen Leuchtstoffpartikel bestimmt werden. Hierzu eignet sich beispielsweise der Sekundärelektronenmodus. Die mittels der verschiedenen Meßverfahren bestimmten d50-Werte entsprechen sich bzw. können zueinander in Bezug gesetzt werden.
Der Medianwert oder d50-Wert ist als Maß für die mittlere Teilchengröße die wichtigste Kenngröße, wobei 50 VolumenProzent der entsprechenden Probe feiner sind und die anderen 50% gröber sind als d50. Der so bestimmte Wert wird auch als volumetrischer d50-Wert bezeichnet. D25 und d75 sind analog definiert, der Vergleich von d25 bzw. d75 mit d50 kann einen Hinweis auf die Breite der Verteilung der Korngrößen geben

Der Anteil der Aktivatoren in dem grünes Licht emittierenden Leuchtstoff liegt in einem Bereich von 20 mol% bis 50 mol%, beispielsweise im Fall von CAT. Zusätzlich liegt der Anteil der Aktivatoren in dem rotes Licht emittierenden Leuchtstoff in einem Bereich von 2,3 mol% bis 5,5 mol%. Zusätzlich liegt der Anteil der Aktivatoren in dem blaues Licht emittierenden Leuchtstoff in einem Bereich von 3,0 mol% bis 11,0 mol%. Die angegebenen Anteile der Aktivatoren beziehen sich jeweils auf ein Mol des entsprechenden Leuchtstoffs.

Eine Menge an Aktivatoren pro 120 cm Lampenlänge in dem rotes Licht emittierenden Leuchtstoff und dem blaues Licht emittierenden Leuchtstoff, insbesondere eine Gesamtmenge aller Aktivatoren in dem rotes Licht emittierenden Leuchtstoff und dem blaues Licht emittierenden Leuchtstoff der Niederdruckentladungslampe 1, kann beispielsweise in einem Bereich liegen von 4,17*10⁻⁵ mol bis 3,84*10⁻⁴ mol. Alternativ oder zusätzlich kann eine Menge an Aktivatoren in dem grünes Licht emittierenden Leuchtstoff, insbesondere eine Gesamtmenge aller Aktivatoren in dem grünes Licht emittierenden Leuchtstoff der Niederdruckentladungslampe 1, in einem Bereich liegen von 5,06*10⁻⁵ mol bis 4,60*10⁻⁴ mol.

Die Angaben der Mengen der Aktivatoren beziehen sich auf eine Niederdruckentladungslampe 1 mit einer Lampenlänge von ungefähr 120 cm, beispielsweise auf eine T8 L36W/840 Niederdruckentladungslampe 1 der Firma OSRAM. Die Mengen an Aktivatoren können jedoch einfach linear und/oder proportional auf andere Lampenlängen umgerechnet werden, beispielsweise auf die Niederdruckentladungslampen T8 L18W von OSRAM mit einer Lampenlänge von ungefähr 59 cm oder T8 L58W von OSRAM mit einer Lampenlänge von ungefähr 150 cm.

Aufgrund der kleinen mittleren Korngrößen der Leuchtstoffpartikel 34, 36, 38, insbesondere des kleinen d50-Wertes, kann die Leuchtstoffschicht 32 besonders dünn ausgebildet werden. Die Leuchtstoffschicht 32 kann eine Dicke aufweisen in einem Bereich beispielsweise von 6 µm bis 22 µm, beispielsweise von 6 µm bis 15 µm, beispielsweise von 6 µm bis 10 µm. Die Dicke der Leuchtstoffschicht 32 kann jedoch variiert werden, beispielsweise durch Zugabe von Füllstoffen, Zusätzen und/oder Streupartikeln.

Die Lichtausbeute oder Effizienz der Niederdruckentladungslampe 1 kann in einem Bereich liegen beispielsweise von 70 lm/W bis 120 lm/W, beispielsweise von 80 lm/W bis 110 lm/W, beispielsweise von 85 lm/W bis 100 lm/W.

Die Niederdruckentladungslampe 1 kann mit einem Lampenstrom insbesondere zwischen 290 mA und 800 mA betrieben werden. Es kann eine Effizienz bzw. Lichtausbeute beispielsweise größer 70 lm/w, größer 85 lm/W oder größer 95 lm/W erzielt werden. Alternativ dazu kann die Niederdruckentladungslampe mit einem geringeren Lampenstrom insbesondere kleiner 290 mA, insbesondere im Bereich von 140 mA bis 290 mA, insbesondere im Bereich von 150 mA bis 200 mA betrieben werden. Aufgrund der geringeren Lampenströme kann eine höhere Effizienz bzw. höhere Lichtausbeute erzielt werden, beispielsweise größer 80 lm/w, größer 95 lm/W oder größer 105 lm/W.

Die kleinen mittleren Korngrößen d50 ermöglichen, schon bei der besonders geringen Schichtdicke eine geschlossene Leuchtstoffschicht 32 auszubilden. Ein Dotierungsgrad, d.h. der Anteil an Aktivatoren je Leuchtstoff, und/oder ein prozentualer Anteil an Aktivatoren, insbesondere den Metallen der Seltenen-Erden, können dabei ähnlich und insbesondere gleich einem Dotierungsgrad bzw. prozentualen Anteil der Aktivatoren bei bekannten Leuchtstoffen sein. Aufgrund der geringeren erforderlichen Schichtdicke und dem gleichbleibenden Dotierungsgrad bzw. prozentualem Anteil der Aktivatoren verringert sich jedoch die erforderliche absolute Mindestmenge an Aktivatoren, insbesondere an Metallen der Seltenen-Erden, was dazu führt, dass die Niederdruckentladungslampe 1 besonders kostengünstig hergestellt werden kann.

In dem Entladungsraum, beispielsweise auf der Oberfläche 7a und/oder in der Leuchtstoffschicht 7, können sich optional Partikel befinden, die in den Figuren aufgrund ihrer geringen Größe nicht sichtbar bzw. nicht eingezeichnet sind und die beispielsweise dazu beitragen können, dass ein maximaler Lichtstrom im Betrieb schnell erreicht wird und/oder ein Lichtstromanlauf besonders kurz ist. Zusätzlich kann sich eine geringe Menge an Quecksilber in dem Entladungsgefäß 2 befinden, beispielsweise 1 mg Quecksilber oder weniger, wobei das Quecksilber im ausgeschalteten Zustand der Entladungslampe 1 beispielsweise zum Teil flüssig und zum Teil gasförmig sein kann und im eingeschalteten Zustand bei maximalem Lichtstrom zu einem kleineren Teil flüssig und zu einem größeren Teil gasförmig sein kann. Das Quecksilber kann mit den Partikeln eine Verbindung eingehen und/oder beispielsweise mit Indium aufweisenden Partikeln Amalgam bilden. Die Partikel sind beispielsweise Metallpartikel und/oder dienen dazu, Quecksilber zu binden. Beispielsweise weisen die Metallpartikel Indium, Zinn, Titan, Zink, Silber, Gold, Wismut, Aluminium oder Kupfer auf. Die Partikel können beispielsweise eine mittlere Teilchengröße aufweisen zwischen 50 und 2000 nm, zwischen 100 und 500 nm oder zwischen 200 und 300 nm. Es können auch Amalgambildner in Form von Flags oder anderen bekannten Ausgestaltungen vorgesehen sein.

Die Schutzschicht 30 kann beispielsweise Aluminiumoxid und/oder hochdisperses Aluminiumoxid, beispielsweise pyrogenes Aluminiumoxid, aufweisen. Beispielsweise kann die Schutzschicht 30 zu 50% bis 95%, beispielsweise zu ungefähr 70%, Aluminiumoxid und zu 5% bis 50%, beispielsweise zu ungefähr 30% hochdisperses Aluminiumoxid aufweisen.

Die Beschichtungsstruktur 7, insbesondere die Schutzschicht 30 und/oder die Leuchtstoffschicht 32, kann beispielsweise mittels Beschlämmen mit einer wässrigen Suspension ausgebildet werden. Die wässrige Suspension kann die Leuchtstoffpartikel 34, 36, 38 bzw. das Material für die Schutzschicht 30 aufweisen. Nach Aufbringen der wässrigen Suspension auf die Innenwände 24 kann diese durch Erhitzen getrocknet werden, indem der Wasseranteil vollständig oder zumindest weitgehend verdampft wird. Das beschlämmte Entladungsgefäß 2 kann auf Temperaturen beispielsweise von 500 °C bis 800 °C, beispielsweise von 520 °C bis 650 °C, beispielsweise von 530 °C bis 600 °C, erhitzt werden. Die Schutzschicht 30 und die Leuchtstoffschicht 32 können beispielsweise in zwei aufeinanderfolgenden Prozeduren ausgebildet werden.

Im Betrieb der Entladungslampe 2 wird eine Spannung an die Kontaktstifte 4, 5 des Entladungsgefäßes 2 angelegt. Dadurch fließt ein elektrischer Strom durch das Gas in dem Entladungsgefäß 2 und das Quecksilber wird erhitzt. Dadurch wird das enthaltene Quecksilber, beispielsweise das auf die Oberfläche 7a der Leuchtstoffschicht 7 verteilte, gebundene Quecksilber schnell in seine Gasphase überführt. Die gasförmigen Quecksilberatome bzw. -moleküle werden durch die Energie des elektrischen Stroms angeregt und strahlen über das Entladungsgefäß 2 gleichmäßig verteilt UV-Strahlung, beispielsweise bei einer Wellenlänge von 254 nm, ab. Die UV-Strahlung regt die Leuchtstoffe der Leuchtstoffpartikel 34, 36, 38 in der Leuchtstoffschicht 32 zum Leuchten an. Die Leuchtstoffe der Leuchtstoffpartikel 34, 36, 38 können rotes, grünes bzw. blaues Licht emittieren, wodurch beispielsweise weißes Licht erzeugt werden kann.

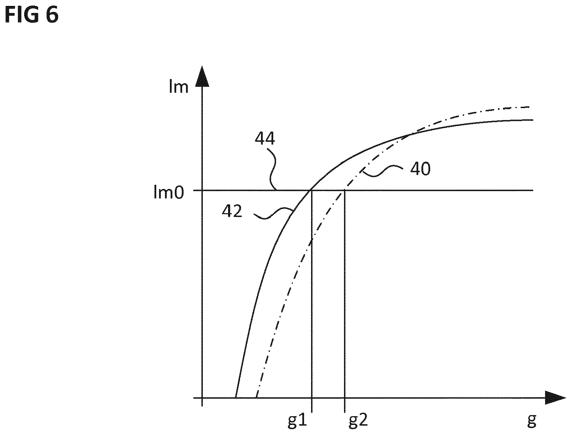

**Fig. 6** zeigt ein Diagramm mit einer ersten Lichtstrom-Gewicht-Kurve 40 einer herkömmlichen Niederdruckentladungslampe gemäß dem Stand der Technik und mit einer zweiten Lichtstrom-Gewicht-Kurve 42 eines Ausführungsbeispiels einer Niederdruckentladungslampe 1, beispielsweise einer der im Vorhergehenden erläuterten Niederdruckentladungslampen 1. In dem Diagramm sind auf der X-Achse das absolute Gesamtgewicht der Leuchtstoffschicht 32 der Niederdruckentladungslampe 1 in Gramm und auf der Y-Achse der Lichtstrom in Lumen angetragen. Hierbei werden entsprechende Lampen, also beispielsweise eine herkömmliche, handelsübliche T8 L36W von OSRAM gemäß DIN 60081 und eine dieser bis auf die Leuchtstoffschicht entsprechende Lampe verglichen.

Aus dem Diagramm geht hervor, dass bei der Niederdruckentladungslampe 1 lediglich eine Leuchtstoffschicht 32 mit einem ersten Gewicht g1 erforderlich ist, um einen vorgegebenen Lichtstrom lm0 zu erreichen, wohingegen bei der herkömmlichen Niederdruckentladungslampe eine Leuchtstoffschicht mit einem höheren zweiten Gewicht g2 erforderlich ist, um den vorgegebenen Lichtstrom lm0 zu erreichen. Bei zu erreichendem vorgegebenem Lichtstrom lm0 ist somit bei der Niederdruckentladungslampe 1 weniger Material für die Leuchtstoffschicht 32 erforderlich als bei der herkömmlichen Niederdruckentladungslampe. Das erste Gewicht g1 kann beispielsweise ungefähr 0,9 g sein und das zweite Gewicht kann beispielsweise ungefähr 0,95 g sein. Somit ist bei dem Ausführungsbeispiel der Niederdruckentladungslampe 1 eine um 0,05 g leichtere Leuchtstoffschicht 32 ausreichend, um den vorgegebenen Lichtstrom zu erreichen.

Die herkömmliche Niederdruckentladungslampe und das Ausführungsbeispiel der Niederdruckentladungslampe 1 können beispielsweise jeweils eine Lampenlänge von 120 cm aufweisen und jeweils eine T8 L36W Niederdruckentladungslampe 1 nach DIN 60081 sein. Die Niederdruckentladungslampen 1 können jeweils Licht mit einer Farbtemperatur von beispielsweise 4000 K erzeugen. Die Entladungsgefäße 2 sind mit einem Füllgasgemisch aus Argon und Krypton gefüllt. Der relative Massenanteil von Argon beträgt 25%, der von Krypton 75%. Der Fülldruck ist jeweils auf ca. 2,1 hPa eingestellt, wobei ca. hier einer Genauigkeit von ungefähr 0,2 hPa entspricht. Die Entladungsgefäße 2 haben einen Innendurchmesser in einem Bereich von 24 mm bis 26 mm und eine Glaswandstärke der Gefäßteile 2, 21, 22 von ungefähr 0,75 mm.

Die bei der herkömmlichen T8 L36W Niederdruckentladungslampe verwendeten Leuchtstoffe sind wie folgt: Der rotes Licht emittierende Leuchtstoff Y₂O₃:Eu ist beispielsweise mit 6,5 Gew% Eu₂O₃ dotiert, was einer Dotierung von 4,3 mol% Europium entspricht, wobei die entsprechenden ersten Leuchtstoffpartikel 34 eine mittlere Korngröße d50 von 2,8 µm haben. Der grünes Licht emittierende Leuchtstoff LAP:Ce,Tb ist mit 11 Gew% Tb₂O₃ dotiert, was einer Dotierung von 14 mol% Terbium entspricht, wobei die entsprechenden zweiten Leuchtstoffpartikel 36 eine mittlere Korngröße d50 von 3,6 µm haben. Der blaues Licht emittierende Leuchtstoff BAM:Eu ist mit 1,4% Eu₂O₃ dotiert, was einer Dotierung von 6 mol% Europium entspricht, wobei die entsprechenden dritten Leuchtstoffpartikel 38 eine mittlere Korngröße d50 von 5,9 µm haben. Die Masseanteile pro 100 g Leuchtstoffmischung betrugen 53,6 g für den rotes Licht emittierenden Leuchtstoff, 34,9 g für den grünes Licht emittierenden Leuchtstoff und 11,5 g für den blaues Licht emittierenden Leuchtstoff. Die gesamte Leuchtstoffmasse für die herkömmliche T8 L36W Niederdruckentladungslampe ist 0,95 g pro Entladungsgefäß.

Die bei einem Beispiel der T8 36W Niederdruckentladungslampe 1 verwendeten Leuchtstoffe sind wie folgt: Der rotes Licht emittierende Leuchtstoff Y₂O₃:Eu ist beispielsweise mit 6,5 Gew% Eu₂O₃ dotiert, was einer Dotierung von 4,3 mol% Europium entspricht, wobei die entsprechenden ersten Leuchtstoffpartikel 34 eine mittlere Korngröße d50 von 1,6 µm haben. Der grünes Licht emittierende Leuchtstoff LAP:Ce,Tb ist mit 11 Gew% Tb₂O₃ dotiert, was einer Dotierung von 14 mol% Terbium entspricht und außerhalb des beanspruchten Bereichs liegt, wobei die entsprechenden zweiten Leuchtstoffpartikel 36 eine mittlere Korngröße d50 von 2,0 µm haben. Der blaues Licht emittierende Leuchtstoff BAM:Eu ist mit 1,4% Eu₂O₃ dotiert, was einer Dotierung von 6 mol% Europium entspricht, wobei die entsprechenden dritten Leuchtstoffpartikel 38 eine mittlere Korngröße d50 von 2,8 µm haben. Die Masseanteile pro 100 g Leuchtstoffmischung betrugen 54,3 g für den rotes Licht emittierenden Leuchtstoff, 34,2 g für den grünes Licht emittierenden Leuchtstoff und 11,5 g für den blaues Licht emittierenden Leuchtstoff.
Die Leuchtstoffmasse für die T8 L36W Niederdruckentladungslampe 1 ist 0,90 g/Entladungsgefäß, um die äquivalente Lichtausbeute gemäß Stand der Technik zu erzielen, also 0,05 g/Entladungsgefäß weniger als bei der entsprechenden herkömmlichen Niederdruckentladungslampe. Beispielsweise können bei der Niederdruckentladungslampe 1 mit den Leuchtstoffpartikeln 34, 36, 38 mit den geringen mittleren Korngrößen und vorgegebenen optischen Eigenschaften bei den Ausgangsmaterialien, insbesondere den zu verarbeitenden Oxiden, bis zu 4 Gew% Y₂O₃, bis zu 3 Gew% Eu₂O₃ und/oder bis zu 18 Gew% Tb₂O₃ eingespart werden.
Die Leuchtstoffschicht 32 befindet sich bei beiden Niederdruckentladungslampen auf der Aluminiumoxid aufweisenden Schutzschicht 30, die beispielsweise eine Gesamtmasse von ca. 0,47 g/Entladungsgefäß aufweist, wobei ca. 30 Gew% pyrogenes Aluminiumoxid sind und 70 Gew% ein Alpha Aluminiumoxid, wie bspw. Baikowsky CR30F, sind.

Die photometrischen Messungen für die Lichtstrom-Gewicht-Kurven 40, 42 sind gemäß DIN EN 60081:2010-12 für zweiseitig gesockelte Leuchtstofflampen und den darin definierten Anforderungen an die Arbeitsweise bei einem Lampenalter von 100 h durchgeführt.

Die Dotierung eines Leuchtstoffs kann beispielsweise in mol% Aktivator angegeben werden. So kann die Formel des Blauleuchtstoffs BAM:Eu mit einer Dotierung von 6 mol% Eu beispielsweise wie folgt geschrieben werden (Ba_{0,94}Eu_{0,06}) MgAl₁₀O₁₇. Hierunter versteht man BaMgAl₁₀O₁₇ dotiert mit 6 mol% Eu (d.h. in einem 1 Mol der Summenformel BaMgAl₁₀O₁₇ werden 6 % der Barium-Atome durch Eu-Atome ersetzt). Dies entspricht BaMgAl₁₀O₁₇ dotiert mit 1,4 Gewichts-% Eu₂O₃, d.h. in 100 g BaMgAl₁₀O₁₇ mit einer Dotierung von 6 mol% Eu detektiert man mittels Röntgenfluoreszenzanalyse (RFA) 1,4 g Eu₂O₃.

Die Dotierung kann nachträglich beispielsweise mittels Röntgenfluoreszenzanalyse (RFA) ermittelt werden. Die RFA ist eine Methode der qualitativen Elementaranalytik und aufgrund des niedrigen Präparationsaufwands sehr verbreitet. Hierbei wird die Probe mit energiereicher Röntgenstrahlung angeregt und sendet ihrerseits Element-charakteristische Röntgenstrahlung aus. Aus diesem Spektrum respektive der Intensitätsverteilung der einzelnen Signale lässt sich dann der prozentuale Anteil eines jeden Elements, welches schwerer ist als Fluor, ermitteln. Allgemeiner Standard ist es, wie auch vorstehend erfolgt, diese Werte per Software derart umzurechnen, dass die detektierten Elemente als Gewichtsprozent ihrer oxidischen Verbindung angegeben sind. In anderen Worten werden bei der RFA nicht die Anteile der Oxide detektiert, sondern die der elementaren Aktivatoren, diese werden dann jedoch häufig in entsprechende Anteile an Oxiden umgerechnet.

Korrespondierend zu dem vorgegebenen Lichtstrom lm0 können auch andere vorgegebene optische Eigenschaften, beispielsweise eine vorgegebene Farbtemperatur und/oder eine vorgegebene Lichtausbeute bei der Niederdruckentladungslampe 1 mit weniger Material der Leuchtstoffschicht 23 erzielt werden. Beispielsweise kann mit der Niederdruckentladungslampe 1 eine Lichtausbeute von 70 lm/W bis 120 lm/W, beispielsweise von 80 lm/W bis 110 lm/W, beispielsweise von 85 lm/W bis 100 lm/W erzielt werden. Das erzeugte Licht kann beispielsweise eine Farbtemperatur von 2.500 K bis 8.000 K, beispielsweise von 2.500 K bis 3.200 K, beispielsweise von 3.500 K bis 4.200 K, beispielsweise von 5.000 K bis 6.500 K aufweisen.
Die Quanteneffizienz der Leuchtstoffpartikel 34, 36, 38 kann beispielsweise in einem Bereich liegen von 80% bis 100%, beispielsweise von 82% bis 98%, beispielsweise von 83% bis 92%.

Als Alternativen seien T8 L58W Niederdruckentladungslampen nach DIN 60081 mit einer Lampenlänge von ca. 150 cm genannt. Der relative Massenanteil von Argon in dem Entladungsraum beträgt bei diesen 25%, der von Krypton 75%. Der Fülldruck ist auf ca. 2.0 hPa eingestellt, wobei ca. einer Genauigkeit von 0.2 hPa entspricht. Die Entladungsgefäße 2 haben einen Innendurchmesser im Bereich beispielsweise von 24 mm bis 26 mm und eine Glaswandstärke der Gefäßteile 2, 21, 22 von 0,75 mm.

Die verwendeten Leuchtstoffe sind bei herkömmlichen T8 L58W Niederdruckentladungslampen beispielsweise wie folgt: Der rotes Licht emittierende Leuchtstoff Y₂O₃:Eu ist beispielsweise mit 6,5 Gew% Eu₂O₃ dotiert, was einer Dotierung von 4,3 mol% Europium entspricht, wobei die entsprechenden ersten Leuchtstoffpartikel 34 eine mittlere Korngröße d50 von 2,8 µm haben. Der grünes Licht emittierende Leuchtstoff LAP:Ce,Tb ist mit 11 Gew% Tb₂O₃ dotiert, was einer Dotierung von 14 mol% Terbium entspricht, wobei die entsprechenden zweiten Leuchtstoffpartikel 36 eine mittlere Korngröße d50 von 3,6 µm haben. Der blaues Licht emittierende Leuchtstoffe BAM:Eu ist beispielsweise mit 1,4 Gew% Eu₂O₃ dotiert, was einer Dotierung von 6 mol% Europium entspricht, wobei die entsprechenden dritten Leuchtstoffpartikel 38 eine mittlere Korngröße d50 von 5,9 µm haben. Die Masseanteile pro 100 g Leuchtstoffmischung betragen 53,6 g für den rotes Licht emittierenden Leuchtstoff, 34,9 g für den grünes Licht emittierenden Leuchtstoff und 11,5 g für den blaues Licht emittierenden Leuchtstoff. Die Leuchtstoffmasse bei der herkömmlichen T8 L58W Niederdruckentladungslampe ist: 0,95 g/Entladungsgefäß * 150 cm / 120 cm = 1,19 g/Entladungsgefäß.

Die gemäß einem Beispiel der T8 L58W Niederdruckentladungslampe 1 verwendeten Leuchtstoffe sind wie folgt: Der rotes Licht emittierende Leuchtstoff Y₂O₃:Eu ist beispielsweise mit 6,5 Gew % Eu₂O₃ dotiert, was einer Dotierung von 4,3 mol% Europium entspricht, wobei die entsprechenden ersten Leuchtstoffpartikel 34 eine mittlere Korngröße d50 von 1,6 µm haben. Der grünes Licht emittierende Leuchtstoff LaPO₄:Ce,Tb ist mit 11 Gew% Tb₂O₃ dotiert, was einer Dotierung von 14 mol% Terbium entspricht und außerhalb des beanspruchten Bereichs liegt, wobei die entsprechenden zweiten Leuchtstoffpartikel 36 eine mittlere Korngröße d50 von 2,0 µm haben. Der blaues Licht emittierende Leuchtstoff BAM:Eu ist mit 1,4 Gew% Eu₂O₃ dotiert, was einer Dotierung von 6 mol% Europium entspricht, wobei die entsprechenden dritten Leuchtstoffpartikel 38 eine mittlere Korngröße d50 von 2,8 µm haben. Die Masseanteile pro 100 g Leuchtstoffmischung betragen beispielsweise 54,3 g für den rotes Licht emittierenden Leuchtstoff, 34,2 g für den grünes Licht emittierenden Leuchtstoff und 11,5 g für den blaues Licht emittierenden Leuchtstoff. Die Leuchtstoffmasse ist gemäß dem Ausführungsbeispiel der T8 L58W Niederdruckentladungslampe, um die äquivalente Lichtausbeute wie beim Stand der Technik zu erzielen,: $0,90 \text{g} / \text{Entladungsgefä} ß * 150 \text{cm} / 120 \text{cm} = 1,13 \text{g} / \text{Entladungsgefä} ß ,$ also 0,06 g/Entladungsgefäß weniger als bei der entsprechenden herkömmlichen Niederdruckentladungslampe.

Die Leuchtstoffschicht befindet sich bei beiden T8 L58W Niederdruckentladungslampen auf einer Aluminiumoxidschutzschicht mit einer Gesamtmasse von ca. 0,5 g/Entladungsgefäß, wobei ca. 30 Gew% pyrogenes Aluminiumoxid sind und 70 Gew% Alpha Aluminiumoxid, wie beispielsweise Baikowsky CR30F, sind.

Als weitere Alternative seien T5 HO54W Niederdruckentladungslampen nach DIN 60081 mit einer Lampenlänge von ca. 115 cm genannt. Der relative Massenanteil von Argon beträgt bei diesen 80%, der von Krypton 20%. Der Fülldruck ist auf ca. 2,7 hPa eingestellt, wobei ca. hier einer Genauigkeit von 0,2 hPa entspricht. Die Entladungsgefäße 2 haben einen Innendurchmesser im Bereich von 13 mm bis 16 mm und eine Glaswandstärke von 0,6 mm.

Die bei der herkömmlichen T5 HO54W Niederdruckentladungslampe verwendeten Leuchtstoffe sind beispielsweise wie folgt: Der rotes Licht emittierende Leuchtstoff Y₂O₃:Eu ist mit 6,5 Gew% Eu₂O₃ dotiert, was einer Dotierung von 4,3 mol% Europium entspricht, wobei die entsprechenden ersten Leuchtstoffpartikel 34 eine mittlere Korngröße d50 von 2,8 µm haben. Der grünes Licht emittierende Leuchtstoff LAP:Ce,Tb ist mit 11 Gew% Tb₂O₃ dotiert, was 14 mol% Terbium entspricht, wobei die entsprechenden zweiten Leuchtstoffpartikel 36 eine mittlere Korngröße d50 von 3,6 µm haben. Der blaues Licht emittierende Leuchtstoff BAM:Eu ist mit 1,4 Gew% Eu₂O₃ dotiert, was einer Dotierung von 6 mol% Europium entspricht, wobei die entsprechenden dritten Leuchtstoffpartikel 38 eine mittlere Korngröße d50 von 5,9 µm haben. Die Masseanteile der Leuchtstoffe pro 100 g Leuchtstoffmischung betragen beispielsweise 53,6 g für den rotes Licht emittierenden Leuchtstoff, 34,9 g für den grünes Licht emittierenden Leuchtstoff und 11,5 g für den blaues Licht emittierenden Leuchtstoff. Die Leuchtstoffmasse bei der herkömmlichen T5 _HO54W Niederdruckentladungslampe ist: $0,95 \text{g} / \text{Entladungsgefä} ß * 115 \text{cm} / 120 \text{cm} = 0,91 \text{g} / \text{Entladungsgefä} ß .$

Die bei einem Beispiel der T5 HO54W Niederdruckentladungslampe 1 verwendeten Leuchtstoffe sind beispielsweise wie folgt: Der rotes Licht emittierende Leuchtstoff Y₂O₃:Eu ist mit 6,5 Gew% Eu₂O₃ dotiert, was einer Dotierung von 4,3 mol% Europium entspricht, wobei die entsprechenden ersten Leuchtstoffpartikel 34 eine mittlere Korngröße d50 von 1,6 µm haben. Der grünes Licht emittierende Leuchtstoff LaPO₄:Ce,Tb ist mit 11 Gew% Tb₂O₃ dotiert, was einer Dotierung von 14 mol% Terbium entspricht und außerhalb des beanspruchten Bereichs liegt, wobei die entsprechenden zweiten Leuchtstoffpartikel 36 eine mittlere Korngröße d50 von 2,0 µm haben. Der blaues Licht emittierende Leuchtstoff BAM:Eu ist mit 1,4 Gew% Eu₂O₃ dotiert, was einer Dotierung von 6 mol% Europium entspricht, wobei die entsprechenden dritten Leuchtstoffpartikel 38 eine mittlere Korngröße d50 von 2,8 µm haben. Die Masseanteile pro 100 g Leuchtstoffmischung betragen beispielsweise 54,3 g für den rotes Licht emittierenden Leuchtstoff, 34,2 g für den grünes Licht emittierenden Leuchtstoff und 11,5 g für den blaues Licht emittierenden Leuchtstoff. Die Leuchtstoffmasse gemäß dem Ausführungsbeispiel der T5 HO 54W Niederdruckentladungslampe 1, um die äquivalente Lichtausbeute wie beim Stand der Technik zu erzielen, ist: $0,90 \text{g} / \text{Entladungsgefä} ß * 115 \text{cm} / 120 \text{cm} = 0,86 \text{g} / \text{Entladungsgefä} ß ,$ also 0,05 g/Entladungsgefäß weniger als bei der entsprechenden herkömmlichen Niederdruckentladungslampe.
Die Leuchtstoffschicht befindet sich bei beiden Niederdruckentladungslampen auf der Schutzschicht 30 mit Aluminiumoxid mit einer Gesamtmasse von ca. 0,1 g/Entladungsgefäß, wobei ca. 99 Gew% pyrogenes Aluminiumoxid sind und 1 Gew% Alpha Aluminiumoxid, wie beispielsweise Baikowsky CR30F, sind.

Die Niederdruckentladungslampen 1 gemäß der Beispiele können ebenso wie die herkömmlichen Niederdruckentladungslampen auf entsprechenden konventionellen Fertigungslinien produziert werden.

Die mittleren Korngrößen werden dabei mittels eines Laserbeugungsmessgeräts, hier insbesondere ein CILAS 1064 der Firma Quantachrome, bestimmt. Es wird der volumetrische d50-Wert angegeben.

Die verwendeten Leuchtstoffmischungen können Licht der Farbtemperatur 4000 K erzeugen.
Ferner kann die Niederdruckentladungslampe 1 allgemein beispielsweise vom Typ T8, T5, T5 HE, T5 DL, T5 HO oder Dulux, Dulux L, Dulux L HE sein.

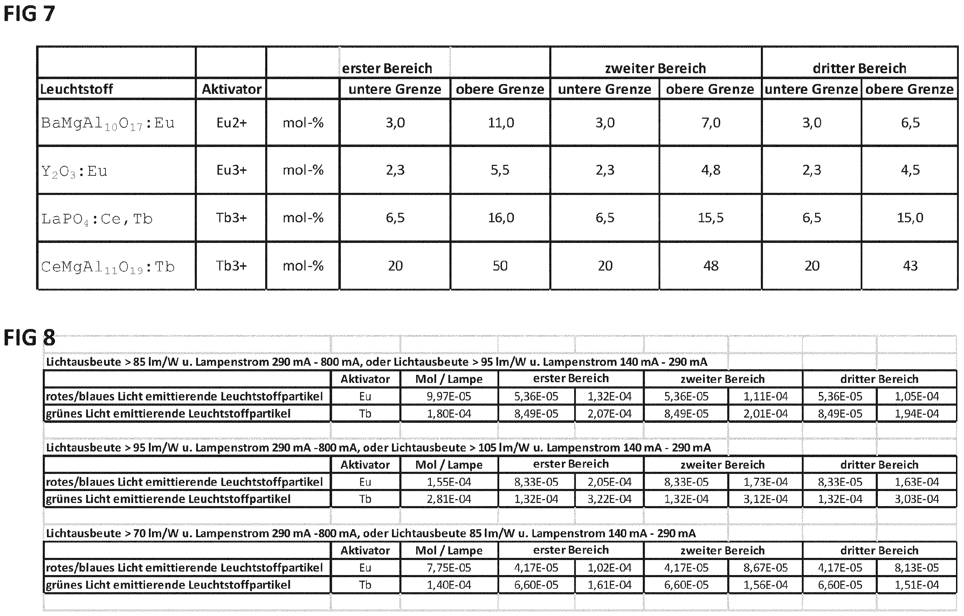

**Fig. 7** zeigt eine erste Tabelle mit beispielhaften Bereichen, die jeweils eine Obergrenze und eine Untergrenze aufweisen. Die Obergrenzen und Untergrenzen beziehen sich auf den Anteil von Aktivatoren in mol% in den entsprechenden Leuchtstoffen eines Ausführungsbeispiels, bzw bei LaPO₄ : Ce, Tb eines nicht zur beanspruchten Erfindung gehörigen Beispiels, einer Niederdruckentladungslampe 1, beispielsweise einer der im Vorhergehenden erläuterten Niederdruckentladungslampen 1. Die Anteile bzw. Mengen liegen in dem ersten Bereich, beispielsweise in dem bevorzugten zweiten Bereich, beispielsweise in dem weiter bevorzugten dritten Bereich. Die Anteile geben an wieviel mol% des entsprechenden Aktivators in einem Mol des entsprechenden Leuchtstoffs enthalten ist.
**Fig. 8** zeigt eine zweite Tabelle mit beispielhaften Angaben zu Mengen der Aktivatoren in Mol pro Niederdruckentladungslampe 1 und mit beispielhaften Bereichen, die jeweils eine Obergrenze und eine Untergrenze aufweisen. Die Obergrenzen und die Untergrenzen beziehen sich auf die Gesamtmenge der Aktivatoren eines Beispiels bzw. Ausführungsbeispiels einer Niederdruckentladungslampe 1 mit 120 cm Lampenlänge, beispielsweise einer der im Vorhergehenden erläuterten Niederdruckentladungslampen 1. Die Gesamtmengen können beispielsweise in dem ersten Bereich liegen, beispielsweise in dem bevorzugten zweiten Bereich, beispielsweise in dem weiter bevorzugten dritten Bereich. Die Ober- und Untergrenzen sind für Niederdruckentladungslampen 1 mit unterschiedlichen Lichtausbeuten und Lampenströmen, beispielsweise Entladungsströmen, angegeben. Die Niederdruckentladungslampen 1 erzeugen Licht mit einer Farbtemperatur von 3.500 K bis 4.200 K und der grünes Licht emittierende Leuchtstoff weist LAP auf.

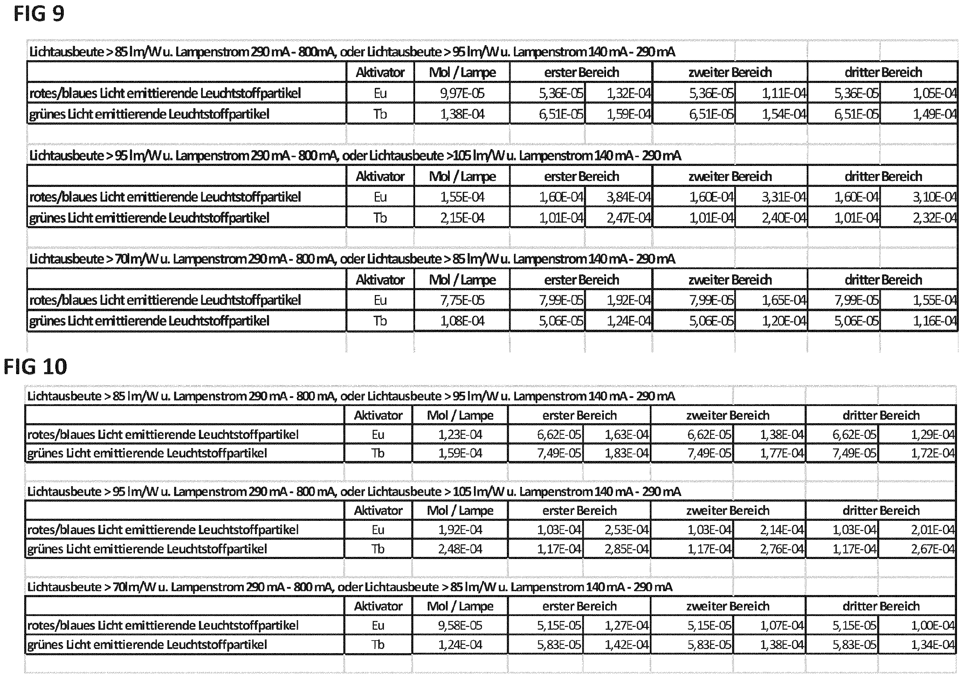

**Fig. 9** zeigt eine dritte Tabelle mit beispielhaften Angaben zu Mengen der Aktivatoren in Mol pro Niederdruckentladungslampe 1 und mit beispielhaften Bereichen, die jeweils eine Obergrenze und eine Untergrenze aufweisen. Die Obergrenzen und die Untergrenzen beziehen sich auf die Gesamtmenge der Aktivatoren eines Beispiels bzw. Ausführungsbeispiels einer Niederdruckentladungslampe 1 mit 120 cm Lampenlänge, beispielsweise einer der im Vorhergehenden erläuterten Niederdruckentladungslampen 1. Die Gesamtmengen können beispielsweise in dem ersten Bereich liegen, beispielsweise bevorzugt in dem zweiten Bereich, beispielsweise weiter bevorzugt in dem dritten Bereich. Die Ober- und Untergrenzen sind für Niederdruckentladungslampen 1 mit unterschiedlichen Lichtausbeuten und unterschiedlichen Lampenströmen, beispielsweise Entladungsströmen, angegeben. Die Niederdruckentladungslampen 1 erzeugen Licht mit einer Farbtemperatur von 3.500 K bis 4.200 K und der grünes Licht emittierende Leuchtstoffe weist CAT auf.
**Fig. 10** zeigt eine vierte Tabelle mit beispielhaften Angaben zu Mengen der Aktivatoren in Mol pro Niederdruckentladungslampe 1 und mit beispielhaften Bereichen, die jeweils eine Obergrenze und eine Untergrenze aufweisen. Die Obergrenzen und die Untergrenzen beziehen sich auf die Gesamtmenge der Aktivatoren eines Beispiels bzw.

Ausführungsbeispiels einer Niederdruckentladungslampe 1 mit 120 cm Lampenlänge, beispielsweise einer der im Vorhergehenden erläuterten Niederdruckentladungslampen 1. Die Gesamtmengen können beispielsweise in dem ersten Bereich liegen, beispielsweise bevorzugt in dem zweiten Bereich, beispielsweise weiter bevorzugt in dem dritten Bereich. Die Ober- und Untergrenzen sind für Niederdruckentladungslampen 1 mit unterschiedlichen Lichtausbeuten und unterschiedlichen Lampenströmen angegeben. Die Niederdruckentladungslampen 1 erzeugen Licht mit einer Farbtemperatur von 2.500 K bis 3.200 K und der grünes Licht emittierende Leuchtstoff weist CAT und/oder LAP auf.

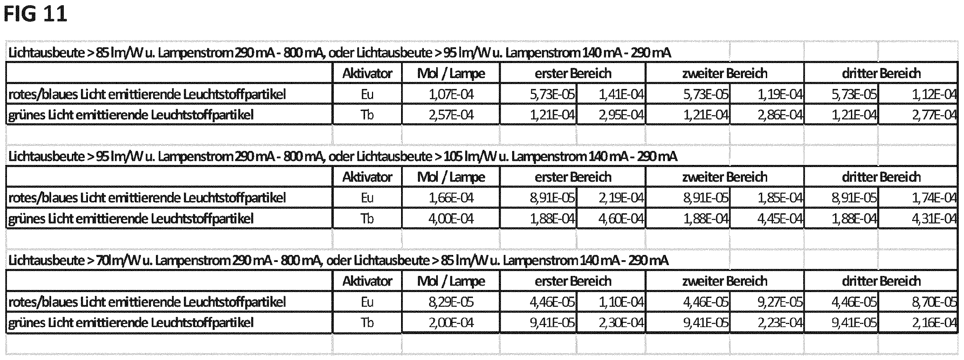

**Fig. 11** zeigt eine fünfte Tabelle mit beispielhaften Angaben zu Mengen der Aktivatoren in Mol pro Niederdruckentladungslampe 1 und mit beispielhaften Bereichen, die jeweils eine Obergrenze und eine Untergrenze aufweisen. Die Obergrenzen und die Untergrenzen beziehen sich auf die Gesamtmenge der Aktivatoren eines Beispiels bzw.

Ausführungsbeispiels einer Niederdruckentladungslampe 1 mit 120 cm Lampenlänge, beispielsweise einer der im Vorhergehenden erläuterten Niederdruckentladungslampen 1. Die Gesamtmengen können beispielsweise in dem ersten Bereich liegen, beispielsweise bevorzugt in dem zweiten Bereich, beispielsweise weiter bevorzugt in dem dritten Bereich. Die Ober- und Untergrenzen für Niederdruckentladungslampen 1 sind mit unterschiedlicher Lichtausbeute angegeben. Die Niederdruckentladungslampen 1 erzeugen Licht mit einer Farbtemperatur von 5.000 K bis 6.500 K und der grünes Licht emittierende Leuchtstoff weist CAT und/oder LAP auf.

Die Erfindung ist nicht auf die angegebenen Ausführungsbeispiele beschränkt. Beispielsweise kann die Niederdruckentladungslampe 1 mehr oder weniger Gefäßteile 21, 22 aufweisen. Ferner können die Leuchtstoffpartikel 34, 36, 38 von anderen chemischen Elementen als den im Vorhergehenden genannten gebildet sein.

## Patentansprüche

1. Niederdruckentladungslampe (1), mit einem Entladungsgefäß (2) und einer Beschichtungsstruktur (7), die auf einer Innenseite des Entladungsgefäßes (2) ausgebildet ist, die Beschichtungsstruktur (7) aufweisend erste Leuchtstoffpartikel (34), die mindestens einen rotes Licht emittierenden Leuchtstoff aufweisen und deren mittlere Korngröße, ermittelt in Form des d50-Wertes, in einem Bereich liegt von 0,5 µm bis 1,9 µm, zweite Leuchtstoffpartikel (36), die mindestens einen grünes Licht emittierenden Leuchtstoff aufweisen und deren mittlere Korngröße, ermittelt in Form des d50-Wertes, in einem Bereich liegt von 1 µm bis 4 µm, und dritte Leuchtstoffpartikel (38), die mindestens einen blaues Licht emittierenden Leuchtstoff aufweisen und deren mittlere Korngröße, ermittelt in Form des d50-Wertes, in einem Bereich liegt von 1 µm bis 4 µm,
wobei die Leuchtstoffe jeweils Aktivatoren und Wirtsgitter aufweisen, die mit den Aktivatoren dotiert sind,
**dadurch gekennzeichnet, dass**
ein Anteil der Aktivatoren in dem grünes Licht emittierenden Leuchtstoff in einem Bereich liegt von 20 mol% bis 50 mol%,
ein Anteil der Aktivatoren in dem rotes Licht emittierenden Leuchtstoff in einem Bereich liegt von 2,3 mol% bis 5,5 mol%, und
ein Anteil der Aktivatoren in dem blaues Licht emittierenden Leuchtstoff in einem Bereich liegt von 3,0 mol% bis 11,0 mol%.

2. Niederdruckentladungslampe (1) nach Anspruch 1, bei der die mittlere Korngröße der ersten Leuchtstoffpartikel (34) in einem Bereich liegt von 1,2 µm bis 1,7 µm, und/oder die mittlere Korngröße der zweiten Leuchtstoffpartikel (36) in einem Bereich liegt von 1,5 µm bis 3,5 µm, und/oder die mittlere Korngröße der dritten Leuchtstoffpartikel (38) in einem Bereich liegt von 1, 5 µm bis 3,5 µm.

3. Niederdruckentladungslampe (1) nach Anspruch 2, bei der - die mittlere Korngröße der zweiten Leuchtstoffpartikel (36) in einem Bereich liegt von 2,0 µm bis 3,4 µm, und/oder - die mittlere Korngröße der dritten Leuchtstoffpartikel (38) in einem Bereich liegt von 2,5 µm bis 3,3 µm.

4. Niederdruckentladungslampe (1) nach einem der vorstehenden Ansprüche, bei der - eine Menge an Aktivatoren pro 120 cm Lampenlänge in dem rotes Licht emittierenden Leuchtstoff und dem blaues Licht emittierenden Leuchtstoff in einem Bereich liegt von 4,17*10⁻⁵ mol bis 3,84*10⁻⁴ mol, und/oder - eine Menge an Aktivatoren pro 120 cm Lampenlänge in dem grünes Licht emittierenden Leuchtstoff in einem Bereich liegt von 5,06*10⁻⁵ mol bis 4,60 * 10⁻⁴ mol .

5. Niederdruckentladungslampe (1) nach einem der vorstehenden Ansprüche, bei der die Aktivatoren Metalle der Seltenen-Erden aufweisen.

6. Niederdruckentladungslampe (1) nach Anspruch 5, bei der die Aktivatoren Europium und/oder Terbium aufweisen.

7. Niederdruckentladungslampe (1) nach einem der vorstehenden Ansprüche, bei der die Beschichtungsstruktur (7) aufweist eine Schutzschicht (30), die auf einer Innenseite (24) des Entladungsgefäßes (2) ausgebildet ist, und eine Leuchtstoffschicht (32), die auf der Schutzschicht (30) ausgebildet ist und die die Leuchtstoffpartikel (34, 36, 38) aufweist.

8. Niederdruckentladungslampe (1) nach Anspruch 7, bei der die Schutzschicht (30) Aluminiumoxid und/oder pyrogenes und/oder hochdisperses Aluminiumoxid aufweist.

9. Niederdruckentladungslampe (1) nach einem der vorstehenden Ansprüche, die im Betrieb weißes Licht emittiert .

10. Niederdruckentladungslampe (1) nach einem der vorstehenden Ansprüche, die im Betrieb Entladungsströme aufweist in einem Bereich von 140 mA bis 800 mA.

11. Niederdruckentladungslampe (1) nach einem der vorstehenden Ansprüche, bei der die Lichtausbeute in einem Bereich liegt von 70 Im/W bis 120 Im/W.

12. Niederdruckentladungslampe (1) nach einem der vorstehenden Ansprüche, bei der eine Farbtemperatur des erzeugten Lichts in einem Bereich liegt von 2.500 K bis 6.500 K.

13. Niederdruckentladungslampe (1) nach einem der vorstehenden Ansprüche, bei der die Quanteneffizienz der Leuchtstoffe in einem Bereich liegt von 80% bis 100%.

## Claims

1. Low-pressure discharge lamp (1) comprising a discharge vessel (2) and a coating structure (7) formed on an inner side of the discharge vessel (2), the coating structure (7) comprising first fluorescent particles (34) which comprise at least one red light-emitting fluorescent substance and whose average grain size, determined in terms of the d50 value, lies in a range from 0.5 µm to 1.9 µm, second fluorescent particles (36) which comprise at least one green light-emitting fluorescent substance and whose average grain size, determined in terms of the d50 value, lies in a range from 1 µm to 4 µm, and third fluorescent particles (38) which comprise at least one blue light-emitting fluorescent substance and whose average grain size, determined in terms of the d50 value, lies in a range from 1 µm to 4 µm, where each fluorescent has activators and host lattices doped with the activators,
**characterized in that**
a portion of the activators in the green light-emitting fluorescent substance lies in a range from 20 mol% to 50 mol%,
a portion of the activators in the red light-emitting fluorescent substance lies in a range of 2.3 mol% to 5.5 mol%, and
a portion of the activators in the blue light emitting fluorescent substance lies in a range from 3.0 mol% to 11.0 mol%.

2. Low-pressure discharge lamp (1) according to claim 1, in which the average grain size of the first fluorescent particles (34) lies in a range from 1.2 µm to 1.7 µm, and/or the average grain size of the second fluorescent particles (36) lies in a range from 1.5 µm to 3.5 µm, and/or the average grain size of the third fluorescent particles (38) lies in a range from 1.5 µm to 3.5 µm.

3. Low-pressure discharge lamp (1) according to claim 2, in which
- the average grain size of the second fluorescent particles (36) lies in a range from 2.0 µm to 3.4 µm, and/or
- the average grain size of the third fluorescent particles (38) lies in a range from 2.5 µm to 3.3 µm.

4. Low-pressure discharge lamp (1) according to any of the above claims, in which
- an amount of activators per 120 cm lamp length in the red light-emitting fluorescent substance and the blue light-emitting fluorescent substance lies in the range from 4.17*10⁻⁵ mol to 3.84*10⁻⁴ mol, and/or
- an amount of activators per 120 cm lamp length in the green light-emitting fluorescent substance lies in the range of 5.06*10⁻⁵ mol to 4.60*10⁻⁴ mol..

5. Low-pressure discharge lamp (1) according to any of the above claims, in which the activators comprise rare earth metals.

6. Low-pressure discharge lamp (1) according to claim 5, in which the activators comprise europium and/or terbium.

7. Low-pressure discharge lamp (1) according to any of the above claims, in which the coating structure (7) comprises a protective layer (30) formed on an inner side (24) of the discharge vessel (2) and a fluorescent layer (32) formed on the protective layer (30) and comprising the fluorescent particles (34, 36, 38).

8. Low-pressure discharge lamp (1) according to claim 7, in which the protective layer (30) comprises aluminum oxide and/or fumed and/or highly dispersed aluminum oxide.

9. Low-pressure discharge lamp (1) according to any of the above claims, which emits white light under operation.

10. Low-pressure discharge lamp (1) according to any of the above claims, which comprises discharge currents in a range of 140 mA to 800 mA under operation.

11. Low-pressure discharge lamp (1) according to any of the above claims, in which the luminous efficacy lies in a range from 70 Im/W to 120 Im/W.

12. Low-pressure discharge lamp (1) according to any one of the above claims, in which a color temperature of the generated light lies within a range of 2,500 K to 6,500 K.

13. Low-pressure discharge lamp (1) according to any of the above claims, in which the quantum efficiency of the fluorescents substances lies in a range of 80% to 100%.

## Revendications

1. Lampe à décharge à basse pression (1) avec un récipient à décharge (2) et une structure de revêtement (7) qui est formée sur un côté intérieur du récipient à décharge (2), la structure de revêtement (7) comprenant de premières particules luminophores (34) qui présentent au moins un luminophore émetteur de lumière rouge et dont la granulométrie moyenne, déterminée sous la forme de la valeur d50, se situe dans une plage de 0,5 µm à 1,9 µm, de deuxièmes particules luminophores (36) qui présentent au moins un luminophore émetteur de lumière verte et dont la granulométrie moyenne, déterminée sous la forme de la valeur d50, se situe dans une plage de 1 µm à 4 µm, et de troisièmes particules luminophores (38) qui présentent au moins un luminophore émetteur de lumière bleue et dont la granulométrie moyenne, déterminée sous la forme de la valeur d50, se situe dans une plage de 1 µm à 4 µm,
dans laquelle les luminophores présentent chacun des activateurs et des réseaux d'hôtes, qui sont dotés des activateurs,
**caractérisés en ce**
**qu'**une part des activateurs dans le luminophore émetteur de lumière verte se situe dans une plage de 20 % mol à 50 % mol,
**qu'**une part des activateurs dans le luminophore émetteur de lumière rouge se situe dans une plage de 2,3 % mol à 5,5 % mol, et
**qu'**une part des activateurs dans le luminophore émetteur de lumière bleue se situe dans une plage de 3,0 % mol à 11,0 % mol.

2. Lampe à décharge à basse pression (1) selon la revendication 1, dans laquelle la granulométrie moyenne des premières particules luminophores (34) se situe dans une plage de 1,2 µm à 1,7 µm, et/ou la granulométrie moyenne des deuxièmes particules luminophores (36) se situe dans une plage de 1,5 µm à 3,5 µm, et/ou la granulométrie moyenne des troisièmes particules luminophores (38) se situe dans une plage de 1,5 µm à 3,5 µm.

3. Lampe à décharge à basse pression (1) selon la revendication 2, dans laquelle la granulométrie moyenne des deuxièmes particules luminophores (36) se situe dans une plage de 2,0 µm à 3,4 µm, et/ou la granulométrie moyenne des troisièmes particules luminophores (38) se situe dans une plage de 2,5 µm à 3,3 µm.

4. Lampe à décharge à basse pression (1) selon l'une quelconque des revendications précédentes, dans laquelle une quantité d'activateurs par 120 cm de longueur de lampe dans le luminophore émetteur de lumière rouge et le luminophore émetteur de lumière bleue se situe dans une plage de 4,17*10⁻⁵ mol à 3,84*10⁻⁴ mol, et/ou une quantité d'activateurs par 120 cm de longueur de lampe dans le luminophore émetteur de lumière verte se situe dans une plage de 5,06*10⁻⁵ mol à 4,60*10⁻⁴ mol.

5. Lampe à décharge à basse pression (1) selon l'une quelconque des revendications précédentes, dans laquelle les activateurs présentent des métaux de terres rares.

6. Lampe à décharge à basse pression (1) selon la revendication 5, dans laquelle les activateurs présentent de l'europium et/ou du terbium.

7. Lampe à décharge à basse pression (1) selon l'une quelconque des revendications précédentes, dans laquelle la structure de revêtement (7) présente une couche de protection (30) qui est formée sur un côté intérieur (24) du récipient à décharge (2) et une couche de luminophore (32) qui est formée sur la couche de protection (30) et présente les particules luminophores (34, 36, 38).

8. Lampe à décharge à basse pression (1) selon la revendication 7, dans laquelle la couche de protection (30) présente de l'alumine et/ou de l'alumine pyrogène et/ou hautement dispersée.

9. Lampe à décharge à basse pression (1) selon l'une quelconque des revendications précédentes, qui en fonctionnement émet de la lumière blanche.

10. Lampe à décharge à basse pression (1) selon l'une quelconque des revendications précédentes, qui en fonctionnement présente des courants de décharge dans une plage de 140 mA à 800 mA.

11. Lampe à décharge à basse pression (1) selon l'une quelconque des revendications précédentes, dans laquelle l'efficacité lumineuse se situe dans une plage de 70 Im/W à 120 Im/W.

12. Lampe à décharge à basse pression (1) selon l'une quelconque des revendications précédentes, dans laquelle la température des couleurs de la lumière générée se situe dans une plage de 2 500 K à 6 500 K.

13. Lampe à décharge à basse pression (1) selon l'une quelconque des revendications précédentes, dans laquelle le rendement quantique des luminophores se situe dans une plage de 80 % à 100 %.
